# EUROPÄISCHE PATENTSCHRIFT

(11) **EP 3 453 503 B1**
(45) Veröffentlichungstag und Bekanntmachung des Hinweises auf die Patenterteilung: **16.02.2022**
(21) Anmeldenummer: 18000724.7
(22) Anmeldetag: 07.09.2018
(51) Int. Cl.: B27C 1/08, B23Q 11/00, G01B 11/06

(54) **MASCHINE ZUR BEARBEITUNG VON LÄNGLICHEN WERKSTÜCKEN AUS HOLZ, KUNSTSTOFF UND DERGLEICHEN SOWIE VERFAHREN ZUR VERMESSUNG SOLCHER LÄNGLICHER WERKSTÜCKE**
MACHINE FOR MACHINING ELONGATED WORK PIECES CONSISTING OF WOOD, SYNTHETIC MATERIAL OR THE LIKE AND METHOD FOR MEASURING SUCH ELONGATED WORKPIECES
MACHINE D'USINAGE DE PIÈCES À USINER OBLONGUES EN BOIS, EN PLASTIQUE ET ANALOGUES AINSI QUE PROCÉDÉ DE MESURE DE TELLES PIÈCES À USINER OBLONGUES

(30) Priorität: 11.09.2017 DE 102017008554
(43) Veröffentlichungstag der Anmeldung: 13.03.2019
(73) Patentinhaber: Michael Weinig AG, 97941 Tauberbischofsheim (DE)
(72) Erfinder: BALLWEG, Josef, 97900 Külsheim (DE); DAWIDZIAK, Albrecht, 97950 Grossrinderfeld (DE); BURGER, Christian, 97941 Tauberbischofsheim (DE)
(74) Vertreter: Kohl, Karl-Heinz

(56) Entgegenhaltungen:
- DE-A1- 4 105 207
- DE-A1-102006 059 415
- US-A- 2 859 780
- US-A1- 2003 205 293
- US-A1- 2004 177 896
- US-A1- 2004 235 391
- US-B1- 6 533 642

## Beschreibung

Die Erfindung betrifft eine Kehlmaschine zur Bearbeitung von länglichen Werkstücken aus Holz, Kunststoff und dergleichen nach dem Oberbegriff des Anspruches 1 sowie ein Verfahren zur Vermessung länglicher Werkstücke nach dem Oberbegriff des Anspruches 7.

Eine derartige Kehlmaschine und ein derartiges Verfahren gehen beispielsweise aus der US 2004/177896 A1 hervor.

Es sind Maschinen in Form von Kehlmaschinen bekannt, mit denen längliche Werkstücke im Durchlaufverfahren an allen Seiten bearbeitet werden, z.B. durch Hobeln oder Fräsen.

Aus den länglichen Werkstücken werden häufig Leimbinder bzw. Brettschichthölzer hergestellt, indem diese Werkstücke mit ihren Ober- und Unterseiten aufeinanderliegend miteinander verleimt werden. Bei der Bearbeitung der Ober- und der Unterseite der Werkstücke kommt es vor, dass sie nicht exakt parallel zueinander verlaufen. Dies hat zur Folge, dass beim Aufeinandersetzen dieser Werkstücke das entstehende Brettschichtholz eine Krümmung erhält. Außerdem kann aufgrund dieser mangelnden Parallelität nicht gewährleistet werden, dass beim Verleimen die Presse die Lamellen über die komplette Breite der Leimfugen mit der erforderlichen Kraft beaufschlagen kann. Der Leim kann dadurch nicht wirksam eingesetzt werden und es können offene Leimfugenbereiche zurückbleiben. Diese mangelnde Parallelität von Werkstückober- und -unterseite kann beispielsweise durch falsch eingestellte oder stumpfe Werkzeuge, durch eine unzureichende Werkstückführung und dergleichen auftreten.

Der Erfindung liegt die Aufgabe zugrunde, die gattungsgemäße Maschine, die gattungsgemäße Messeinrichtung und das gattungsgemäße Verfahren so auszubilden, dass die Werkstücke so bearbeitet werden können, dass ihre Ober- und Unterseite eine möglichst optimale Parallelität zueinander aufweisen.

Diese Aufgabe wird bei der gattungsgemäßen Kehlmaschine erfindungsgemäß mit den kennzeichnenden Merkmalen des Anspruches 1 und beim gattungsgemäßen Verfahren erfindungsgemäß mit den kennzeichnenden Merkmalen des Anspruches 7 gelöst.

Die erfindungsgemäße Maschine weist die Messeinrichtung mit den ober- und unterhalb des Werkstückes angeordneten Messelementen auf. Sie sind an eine Steuerung angeschlossen, an welche die Signale der Messelemente übertragen werden. Aus diesen Messelementsignalen ermittelt die Steuerung das Maß der Parallelität zwischen der Oberseite und der Unterseite des Werkstückes. Sobald die Steuerung feststellt, dass das Maß der Parallelität einen vorgegebenen Toleranzwert über- oder unterschreitet, wird dies von der Steuerung erkannt, so dass sofort Gegenmaßnahmen eingeleitet werden können. Dadurch können Fehler frühzeitig erkannt und Ausschuss vermieden, zumindest aber in erheblichem Maße verringert werden. Gleichzeitig kann mit den Messelementen auch die Dicke des Werkstückes erfasst werden. Wenn die Dicke einen vorgegebenen Toleranzwert über- oder unterschreitet, wird dies ebenfalls von der Steuerung erkannt und es wird ein Signal gesendet, um Gegenmaßnahmen einleiten zu können oder um die Maschine abzuschalten.

Als Maß für die Parallelität kann beispielsweise der Dickenunterschied an zwei Stellen, über die Werkstückbreite gesehen, herangezogen werden.

Ebenso kann als Maß für die Parallelität die Steigungsabweichung zweier Geraden dienen, die sich senkrecht zur Längsrichtung der Werkstücke, d.h. in Breitenrichtung erstrecken und von denen eine die Oberseite und die andere die Unterseite des Werkstückes beschreibt. Die Geraden können beispielsweise jeweils über zwei Messpunkte an der Oberseite und Unterseite bestimmt werden oder über die von einer 3D-Kamera ermittelten Breitenprofile von Ober- bzw. Unterseite. Auch die Verrechnung der Abstandswerte von jeweils zwei Messpunkten an der Oberseite und Unterseite zu den jeweiligen Messelementen gibt unter Berücksichtigung der Positionen der Messelemente ein Hinweis auf die Parallelität des Werkstückes. Die beschriebenen Messwerte werden jeweils zu gleichen Zeitpunkten, d.h. an gleichen Längenpositionen der Werkstücke im Durchlauf der Werkstücke erfasst.

Die Messelemente sind vorteilhaft mit Abstand zur Ober- und Unterseite der Werkstücke angeordnet. Das Maß des Abstandes richtet sich nach dem Messbereich der eingesetzten Messelemente, welcher wiederum im Wesentlichen von der Art des Messobjektes und der gewünschten Messgenauigkeit abhängt.

Damit die Messeinrichtung durch die Bearbeitung der Werkstücke nicht beeinträchtigt wird, ist die Messeinrichtung bei einer bevorzugten Ausführungsform außerhalb des Maschinenraumes angeordnet, vorteilhaft an einer Auslassöffnung der Maschine. Die Werkstücke werden daher beim Austritt aus der Maschine und damit nach ihrer Bearbeitung von der Messeinrichtung erfasst und gemessen. Die im Maschinenraum bei der Werkstückbearbeitung anfallenden Späne und dergleichen gelangen dadurch nicht an die Messeinrichtung bzw. an ihre Messelemente. Dadurch müssen die Messelemente nur in größeren Zeitabständen gereinigt werden, um eine zuverlässige Messung sicherzustellen.

Bei einer einfachen Ausführungsform sind im Bereich oberhalb und unterhalb des Werkstückes jeweils zwei Messelemente vorgesehen. Mit ihnen lässt sich die Parallelität der Ober- und der Unterseite des Werkstückes sehr genau erfassen.

Vorteilhaft sind die Messelemente im Bereich der rechten und der linken Längsseite des Werkstückes angeordnet. In diesen Bereichen des Werkstückes lässt sich die Nichtparallelität von Ober- und Unterseite des Werkstückes optimal feststellen.

Damit auch unterschiedlich breite Werkstücke gemessen werden können, sind in vorteilhafter Weise zumindest eines der oberen und der unteren Messelemente in Breitenrichtung des Werkstückes verstellbar. Dadurch können die Messelemente in die für die Messung günstigste Lage gebracht werden.

Bei einer bevorzugten Ausführungsform sind die Messelemente berührungslos arbeitende Sensoren, insbesondere Laserabstandssensoren. Da sie bei der Messung nicht mit dem Werkstück in Berührung kommen, werden die Werkstücke auch nicht durch die Sensoren beschädigt. Außerdem werden dadurch auch die Sensoren selbst vor Verschleiß geschützt.

Zumindest einer der beiden oberen Sensoren ist quer, vorteilhaft in senkrechter Richtung zur Oberseite des Werkstückes einstellbar. Dadurch kann insbesondere auf unterschiedlich dicke Werkstücke Rücksicht genommen werden.

Als Messelemente können auch 3D-Kameras eingesetzt werden. Dann reicht es auch, oberhalb und unterhalb des Werkstückes jeweils nur eine 3D-Kamera zu verwenden.

Eine Messeinrichtung gemäß eines Ausführungsbeispiels zeichnet sich dadurch aus, dass die Messelemente einander gegenüberliegen, an die Steuerung angeschlossen sind und sich oberhalb und unterhalb des zu vermessenden Werkstückes befinden. Mit den Messelementen wird ihr Abstand zur Oberseite und zur Unterseite des Werkstückes gemessen und hieraus in der Steuerung die Parallelität von Oberseite und Unterseite ermittelt, vorzugsweise auch die Dicke des Werkstückes. Hierzu senden die Messelemente ihre Messwerte an die Steuerung. Ihre Auswerteelektronik bestimmt aus den gelieferten Messwerten der Abstandssensoren die Lage der Oberseite und der Unterseite des Werkstückes relativ zueinander.

Die Steuerung erzeugt in vorteilhafter Weise bei Überschreiten eines vorgegebenen Toleranzwertes bezüglich der Parallelität, vorzugsweise auch der Dicke, ein Signal. Dieses Signal kann ein Warnsignal sein, beispielsweise ein optisches und/oder akustisches Warnsignal, das den Anwender darauf hinweist, dass die Parallelität von Oberseite und Unterseite der Werkstücke bzw. die Dicke ein vorgegebenes Toleranzmaß über- oder unterschreiten. Dann kann der Benutzer der Maschine Vorkehrungen treffen, um die Werkstücke so zu bearbeiten, dass ihre Ober- und Unterseite parallel zueinander verlaufen.

Die Messelemente sind vorteilhaft Abstandssensoren, vorteilhaft Laserabstandssensoren. Mit den von ihnen ausgesandten Laserstrahlen ist eine exakte Vermessung der Werkstücke gewährleistet. Mit den Abstandssensoren wird nahe der rechten und der linken Längsseite des Werkstückes ihr Abstand zur Oberseite und zur Unterseite des Werkstückes gemessen und hieraus in der Steuerung zwei Dickenwerte ermittelt, deren Differenz als Maß der Parallelität von Oberseite und Unterseite des Werkstückes herangezogen wird.

Beim erfindungsgemäßen Verfahren wird mit den Messelementen der Abstand zu der Oberseite und der Unterseite des Werkstückes gemessen. Aus diesen Abstandswerten wird das Maß der Parallelität von Oberseite und Unterseite des Werkstückes ermittelt.

Vorteilhaft wird mit den Messelementen auch die Dicke des Werkstückes erfasst. Auch bei schwankenden Dicken der bearbeiteten Lamellen kann es bei der späteren Herstellung der Leimbinder zu Problemen beim Verleimen kommen, da Bereiche mit größeren Leimfugen nicht mit ausreichender Presskraft und Leimmenge beaufschlagt bzw. versehen sind. Es können offene Leimfugenbereiche auftreten.

Vorteilhaft wird von jeweils zwei im Bereich oberhalb und unterhalb des Werkstückes vorgesehen Abstandssensoren nahe den Längsseiten des Werkstückes der Abstand zu der Oberseite und der Unterseite gemessen und aus den Abstandswerten das Maß der Parallelität von Oberseite und Unterseite des Werkstückes ermittelt.

In vorteilhafter Ausgestaltung wird aus den Abstandswerten auch die Dicke des Werkstückes nahe dessen Längsseiten ermittelt.

Die Steuerung erzeugt vorteilhaft ein Signal, sobald das Maß der Parallelität von Oberseite und Unterseite, vorzugsweise auch der Dicke des Werkstückes einen vorgegebenen Toleranzwert überschreitet oder unterschreitet. Dann können Gegenmaßnahmen ergriffen werden, um die Parallelität in den vorgegebenen Toleranzbereich zu bringen.

Das Steuerungssignal kann ein Meldesignal sein, beispielsweise ein optisches und/oder akustisches Signal.

Das Steuerungssignal kann aber auch ein Abschaltsignal sein, mit dem die Maschine abgeschaltet wird, wenn das Parallelitätsmaß bzw. das Dickenmaß den vorgegebenen Toleranzwert über- oder unterschreitet.

Zusätzlich zum Abschaltsignal kann auch das Meldesignal erzeugt werden.

Die Messung erfolgt während des Transportes des Werkstückes, also im Durchlaufverfahren.

Vorteilhaft erfolgt die Messung quasi- kontinuierlich. Vorteilhaft wird, um Fehlabschaltungen bzw. Fehlwarnmeldungen zu vermeiden, aus mehreren Abstandsmesswerten jeweils ein Mittelwert gebildet, der zur Berechnung der Werkstückdicke herangezogen wird. Vorteilhaft werden auch die Werkstückdicken und die Differenzbildung der Werkstückdicken zur Beurteilung der Parallelität einer Mittelwertbildung unterzogen. Vorteilhaft wird als Mittelwert der gleitende Medianwert ermittelt und herangezogen. Der gleitende Medianwert dient der Glättung der erfassten Abstandssignale.

Weitere vorteilhafte Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer und schematischer Darstellung eine erfindungsgemäße Kehlmaschine zum Bearbeiten von Werkstücken aus Holz, Kunststoff und dergleichen,
- Fig. 2: in Ansicht eine Messeinrichtung der erfindungsgemäßen Kehlmaschine gemäß Fig. 1,
- Fig. 3: in perspektivischer Darstellung ein Brettschichtholz bzw. einen Leimbinder, der aus Werkstücken gebildet ist, deren Ober- und Unterseite parallel zueinander verlaufen,
- Fig. 4: das Brettschichtholz bzw. den Leimbinder, der aus Werkstücken gebildet ist, deren Ober- und Unterseite nicht parallel zueinander verlaufen.

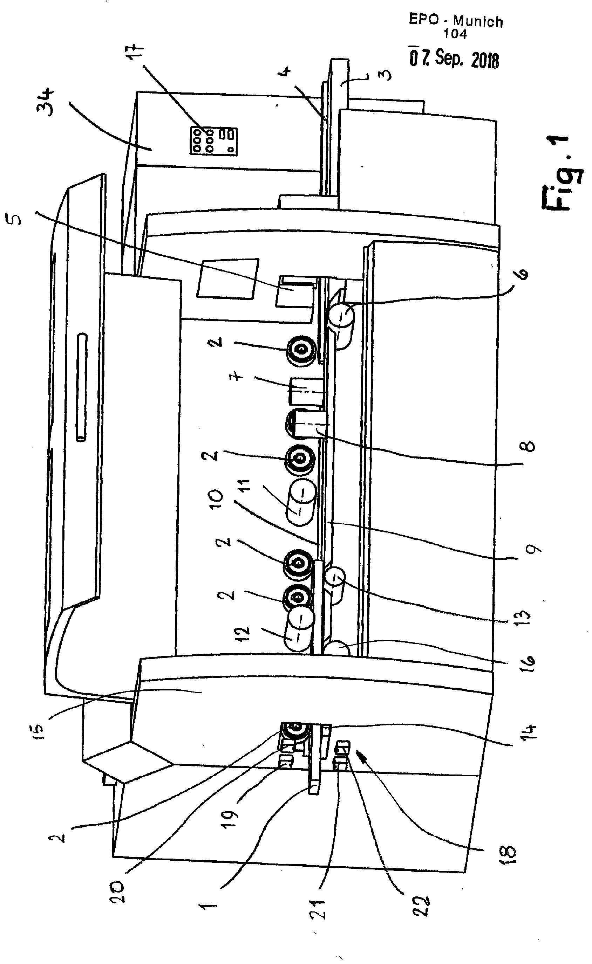

Die Maschine gemäß Fig. 1 dient dazu, Werkstücke 1 im Durchlaufverfahren zu bearbeiten. Die Werkstücke 1 werden während ihres Transportes durch die Maschine durch entsprechende Werkzeuge bearbeitet.

Im Ausführungsbeispiel ist die Maschine eine Kehlmaschine, mit der im Querschnitt viereckige, insbesondere rechteckige, längliche Werkstücke 1 an allen vier Seiten bearbeitet werden. Zum Transport der Werkstücke 1 sind Vorschub- bzw. Transportwalzen 2 vorgesehen, die auf den Werkstücken 1 aufliegen. Im Einlaufbereich der Kehlmaschine befindet sich ein Abrichttisch 3, auf dem die Werkstücke 1 der Kehlmaschine zugeführt werden. An der in Einlaufrichtung rechten Seite des Abrichttisches 3 ist ein Fügelineal 4 vorgesehen, an dem das Werkstück 1 mit seiner rechten Längsseite beim Transport anliegt. Das Fügelineal 4 kann quer zur Transportrichtung des Werkstückes 1 eingestellt werden, um das Maß der Spanabnahme an der rechten Längsseite des Werkstückes 1 einzustellen. Der Abrichttisch 3 lässt sich in vertikaler Richtung einstellen, wodurch das Maß der Spanabnahme an der Unterseite des Werkstückes 1 eingestellt werden kann.

Das Werkstück 1 gelangt über eine Einlauföffnung 5 in die Maschine. Im Maschinenraum befindet sich eine horizontale untere Abrichtspindel, auf der ein Abrichtwerkzeug 6 drehfest sitzt, mit dem beim Durchlaufen des Werkstückes 1 dessen Unterseite spanabhebend bearbeitet, vorzugsweise geradegehobelt wird. In Transportrichtung des Werkstückes 1 hinter dem Abrichtwerkzeug 6 liegt eine vertikale rechte Spindel, auf der ein Werkzeug 7 sitzt, mit dem die in Transportrichtung rechte Längsseite des Werkstückes 1 bearbeitet, vorzugsweise geradegehobelt wird. Das Werkzeug 7 ist ein Hobelkopf mit geraden Messern. Es kann aber auch ein Profilierwerkzeug sein, mit dem an der rechten Werkstückseite ein Profil hergestellt wird.

In Transportrichtung des Werkstückes 1 hinter der vertikalen rechten Spindel ist eine vertikale linke Spindel vorgesehen, auf der ein Werkzeug 8 sitzt, das vorzugsweise ein Hobelkopf ist, mit dem die linke Werkstückseite geradegehobelt wird. Durch die Bearbeitung der rechten und der linken Werkstücklängsseite wird die Breite des fertigen Werkstückes erzeugt.

Auch das Werkzeug 8 kann ein Profilierwerkzeug sein, mit dem ein Profil an der linken Längsseite des Werkstückes 1 hergestellt werden kann.

Beim Durchlauf durch die Maschine liegen die Werkstücke 1 auf einem Maschinentisch 9 auf. Er bildet eine Transportbahn, auf der die Werkstücke 1 aufliegend durch die Maschine transportiert werden. Der Maschinentisch 9 ist maschinenfest und bildet die horizontale Auflage- und Bezugsebene für die Werkstücke 1.

Im Bereich des Abrichtwerkzeuges 6 ist der Maschinentisch 9 unterbrochen, so dass die Unterseite des Werkstückes 1 beim Durchlauf durch die Maschine durch das Abrichtwerkzeug 6 bearbeitet werden kann.

In Transportrichtung der Werkstücke 1 nach dem rechten Werkzeug 7 wird das Werkstück 1 an einem Anschlag 10 weiter durch die Maschine geführt.

Das Werkstück 1 liegt mit seiner rechten, bearbeiteten Längsseite an diesem Anschlag 10 an, der maschinenfest ist und die vertikale Anlage- und Bezugsebene bildet.

In Transportrichtung hinter der linken vertikalen Spindel weist die Maschine eine obere horizontale Spindel auf, auf der drehfest ein Werkzeug 11 sitzt, mit dem die Oberseite des Werkstückes 1 bei seinem Durchlauf durch die Maschine bearbeitet wird. Mit dem Werkzeug 11 kann die Werkstückoberseite beispielsweise geradegehobelt werden.

In Transportrichtung des Werkstückes 1 mit Abstand hinter dem oberen Werkzeug 11 ist ein zweites oberes Werkzeug 12 um eine horizontale Achse drehbar angetrieben.

Im Bereich zwischen den beiden Werkzeugen 11, 12 ist die Maschine mit einer unteren horizontalen Tischwalze 13 versehen, mit der das Werkstück 1 gefördert wird. Der Maschinentisch 9 ist im Bereich dieser Tischwalze 13 unterbrochen.

Das an allen vier Seiten im Durchlaufverfahren bearbeitete Werkstück 1 gelangt durch eine Auslassöffnung 14 aus der Maschine. Die beschriebenen Werkzeuge befinden sich innerhalb einer Maschinenabdeckung 15.

In Transportrichtung der Werkstücke 1 hinter dem Werkzeug 12 ist die Maschine mit einem weiteren horizontalen unteren Werkzeug 16 versehen, das drehfest auf einer unteren Spindel sitzt und mit dem die Unterseite des Werkstückes 1 vor dem Durchtritt durch die Auslassöffnung 14 nochmals bearbeitet werden kann. Der Maschinentisch 9 ist im Bereich dieses Werkzeuges 16 unterbrochen.

Im Einlaufbereich befindet sich außerhalb der Maschinenabdeckung 15 ein Bedienpanel 17, das beispielsweise an einem Schaltschrank 34 neben der Maschinenabdeckung 15 vorgesehen ist und mit dessen Hilfe der Benutzer Einstellungen an der Maschine vornehmen kann.

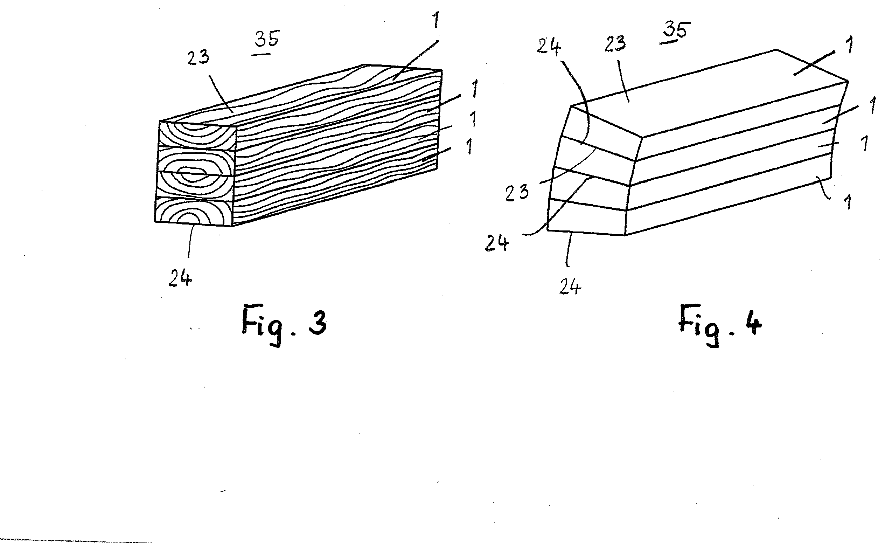

Im Bereich der Auslassöffnung 14 ist eine Messeinrichtung 18 vorgesehen, mit der die Dicke der durch die Auslassöffnung 14 austretenden bearbeiteten Werkstücke 1 erfasst werden kann. Die Dickenvermessung erfolgt während des Durchlaufes des bearbeiteten Werkstückes und dient primär der Überwachung der Parallelität der Werkstücke 1. Dies ist insbesondere bei der Herstellung von Lamellen für Leimbinder 35 (Fig. 3) wesentlich, da diese bei einem konischen Querschnitt der Werkstücke beim Aufeinanderschichten und Verleimen eine Krümmung erfahren. Die Ursachen für das nicht parallele Aushobeln der Werkstücke 1 können vielfältig sein, zum Beispiel falsch eingestellte oder stumpfe Werkzeuge, ein verschmutzter Maschinentisch, eine schlechte Führung der Werkstücke beim Durchlauf durch die Maschine und dergleichen. Durch die Dickenmessung und die Parallelitätsüberwachung können der Ausschuss vermieden und gegebenenfalls Fehler frühzeitig erkannt werden.

Die Messeinrichtung 18 weist vier Laserabstandssensoren 19 bis 22 auf, die an vier Punkten des Werkstückes 1 den Abstand der Werkstückoberfläche zum Sensor ermitteln. Das Messprinzip solcher Sensoren basiert auf der Lasertriangulation. Solche Laserabstandssensoren sind bekannt und werden darum nicht näher beschrieben.

Die vier Sensoren 19 bis 22 erfassen die Werkstückoberseite 23 und die Werkstückunterseite 24 im Bereich der in Transportrichtung rechten Längsseite 25 und der linken Längsseite 26 des Werkstückes 1.

Die Sensoren 19 bis 22 werden zunächst in Bezug auf die jeweils bearbeiteten Werkstücke 1 positioniert, so dass der Abstand zwischen ihnen und dem Werkstück 1 feststeht.

Die Sensoren 19, 20 liegen mit Abstand oberhalb der Werkstückoberseite 23, auf die die von den Sensoren 19, 20 ausgesandten Laserstrahlen 27, 28 treffen. Die Sensoren 21, 22 liegen mit Abstand zur Werkstückunterseite 24, auf die die von diesen Sensoren 21, 22 ausgesandten Laserstrahlen 29, 30 treffen. Mit den Sensoren 19 bis 22wird der Abstand der jeweiligen Werkstückoberfläche 23, 24 zum Sensor ermittelt. Die Sensorsignale werden einer (nicht dargestellten) Steuerung oder Auswerteeinheit übermittelt, die aus den Sensorsignalen die Werkstückdicke sowie die Parallelität der beiden Werkstückseiten 23, 24 ermittelt.

Aus den Signalen der oberen Sensoren 19, 20 und der unteren Signale 21, 22 wird die Dicke des Werkstückes im Bereich der rechten Längsseite 25 sowie der linken Längsseite 26 berechnet. Aus der Differenz der beiden nahe den Längsseiten 25, 26 ermittelten Werkstückdicken kann auf die Parallelität der beiden Werkstückseiten 23, 24 geschlossen werden. Bei Überschreiten einer vorgegebenen Toleranz dieser beiden Messwerte kann eine Warnmeldung ausgegeben oder angezeigt und/oder die Maschine abgeschaltet werden. Die Steuerung sendet entsprechende Steuersignale an eine Warneinrichtung und/oder an den Antrieb der Maschine.

Die Abstandsmessung der Sensoren 19 bis 22 erfolgt nicht kontinuierlich, sondern in bestimmten Zeitabständen. Der Abtastzyklus liegt vorteilhaft im Bereich unter einer Millisekunde, so dass die Messung als quasi-kontinuierlich angesehen werden kann.

Vorteilhaft ermittelt die Steuerung aus diesen einzelnen Sensorsignalen einen Mittelwert bezüglich der Abstände, der Dicke des Werkstückes 1 im Bereich der beiden Längsseiten 25 und 26 und der Parallelität. Auf diese Weise werden Fehlmeldungen oder -abschaltungen vermieden. Da Holz ein inhomogener Werkstoff ist, der Strukturrauheiten, Risse, Aststellen und dgl. aufweisen kann, kann eine einzelne Abstandmessung schon einmal fehlerhaft sein und nicht die tatsächliche bearbeitete Oberfläche erfassen. Die Steuerung ist in diesem Falle so eingerichtet, dass sie aus den getakteten Sensorsignalen die Mittelwertberechnung durchführen kann. Vorteilhaft wird als Mittelwert der gleitende Medianwert ermittelt und herangezogen. Zusätzlich oder alternativ ist es auch möglich, eine Zeit zu hinterlegen, über welche die entsprechenden Toleranzwerte überschritten sein müssen, bevor ein Warn- oder Abschaltsignal gesendet wird.

In der Steuerung können für unterschiedliche zu bearbeitende Werkstücke entsprechende Sollwerte abgelegt sein. Werden sie um einen vorgegebenen Toleranzwert über- oder unterschritten, erzeugt die Steuerung die entsprechenden Sensorsignale.

Der Abstand des Auftreffpunktes der Sensorstrahlen 27 bis 30 auf die Werkstückoberseite 23 und die Werkstückunterseite 24 von den benachbarten Längsseiten 25, 26 kann eingestellt werden, um zuverlässige Messwerte bei der Dickenmessung zu erhalten. Für diesen Fall ist es vorteilhaft, wenn die einzelnen Sensoren 19 bis 22 jeweils unabhängig voneinander in Breitenrichtung 31 verstellbar sind. Die Laserstrahlen 27 bis 30 können hierbei so eingestellt werden, dass sie an der für eine zuverlässige Dickenmessung geeigneten Stelle auf die Werkstückoberseite 23 bzw. Werkstückunterseite 24 gelangen.

Bei einer einfacheren Ausführungsform ist die Messeinrichtung 18 so ausgebildet, dass alle Sensoren 19 bis 22 gemeinsam sowie die Sensoren 20 und 22 zusammen, aber unabhängig von den Sensoren 19 und 21 in Breitenrichtung des Werkstückes 1 verstellt werden können. Dadurch ist eine Anpassung der Messeinrichtung 18 auf unterschiedliche Breiten der Werkstücke 1 einfach möglich.

Bei einer anderen Ausführungsform kann die Messeinrichtung 18 so ausgebildet sein, dass der Sensor 19 in Höhenrichtung 32, der Sensor 20 in Höhenrichtung 32 und in Breitenrichtung 31 und der Sensor 22 in Breitenrichtung 21 verstellbar sind.

Zum Verstellen der Sensoren 19 bis 22 sind entsprechende (nicht dargestellte) Führungen vorgesehen. Die Sensoren 19 bis 22 können gesteuert, d.h. automatisch in Höhen- und/oder Breitenrichtung verstellt werden. Es ist weiter möglich, die Sensoren 19 bis 22 auch manuell in die erforderliche Lage in Bezug auf die Werkstücke 1 zu verstellen.

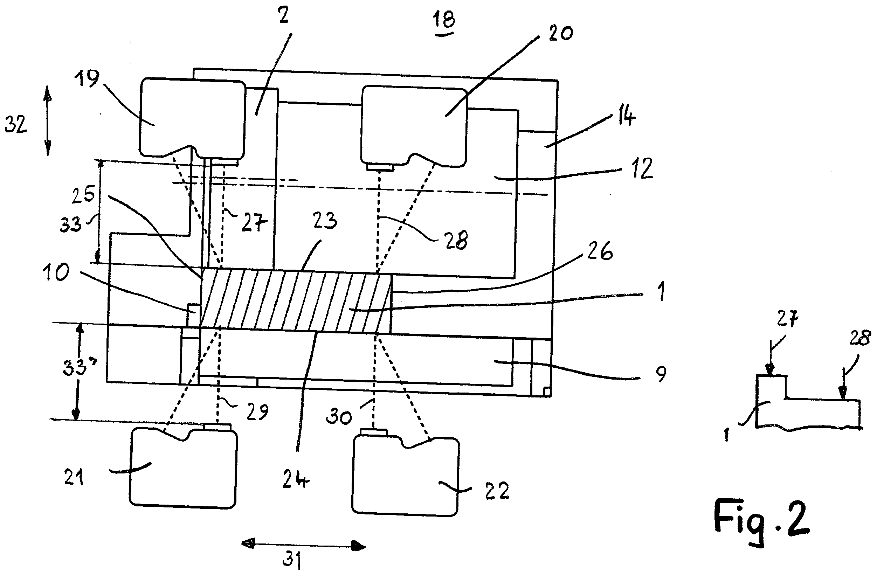

In Fig. 2 ist der Abstand 33 beispielhaft für den Sensor 19 angegeben, den der Sensor von der Werkstückoberseite 23 hat. Dieses Abstandsmaß 33 ist abhängig von der Art des eingesetzten Sensors und dessen Messbereichs. Da das Werkstück 1 auf dem Maschinentisch 9 aufliegt, befindet sich die Werkstückunterseite 24 stets in der gleichen Ebene. Aus diesem Grunde müssen die beiden unteren Sensoren 21, 22 nicht in Höhenrichtung verstellbar sein. Der Höhenabstand 33' der Sensoren von der Werkstückunterseite 24 ist in diesem Falle konstant. Unter der Voraussetzung, dass die Werkstücke von der Unterseite immer sauber gehobelt werden und vollflächig auf dem Maschinentisch aufliegen bzw. auf diesen gedrückt werden, könnte in einer nicht erfindungsgemäßen Ausführungform auf untere Sensoren 21, 22 ganz verzichtet werden, da immer von der gleichen Bezugsebene des Maschinentisches 9 ausgegangen werden kann. Da durch Störungen im Bearbeitungsprozess, stumpfe oder falsch eingestellte Werkzeuge, Verschmutzung oder Spreißel dies in der Praxis nicht immer gewährleitet ist, sind Sensoren, die die Unterseite der Werkstücke erfassen, zur Beurteilung und Sicherstellung der Qualität notwendig und von Vorteil.

Die beiden oberen Sensoren 19, 20 hingegen sind in Höhenrichtung 32 verstellbar, da die Werkstücke 1 unterschiedlich dick sein können. Die Sensoren 19, 20 werden dann an unterschiedlich dicke Werkstücke 1 durch entsprechende Höhenverstellung angepasst. Vorteilhaft können die beiden oberen Sensoren 19 und 20 auch gemeinsam in horizontaler Richtung verstellt werden.

Gleichermaßen befindet sich die rechte Längsseite 25 der Werkstücke 1 stets in der gleichen Ebene, da die Werkstücke 1 mit ihrer rechten Längsseite an dem maschinenfesten Anschlag 10 geführt werden. Somit ist eine Verstellung der in Transportrichtung rechten Sensoren 19 und 21 in horizontaler Richtung nicht unbedingt erforderlich. Zur Breiteneinstellung sind die Sensoren 20 und 22 in horizontaler Richtung verstellbar, vorteilhaft gemeinsam. Dann kann die Einstellung auf die Werkstückbreite einfach vorgenommen werden. Zur genauen Bestimmung der Parallelität ist es vorteilhaft, wenn die in Transportrichtung linken Sensoren 20, 22 das Werkstück 1 nahe seiner linken Längsseite 26 erfassen.

Damit eine zuverlässige Vermessung der Werkstücke 1 ermöglicht wird, werden die Sender- und Empfängerflächen der Sensoren 19 bis 22 vorteilhaft mit Druckluft gereinigt, um Störungen bei der Messung durch Verschmutzung zu vermeiden. Hierfür sind entsprechende Druckluftdüsen vorgesehen, aus denen die Druckluft gezielt auf die Sender- und Empfängerflächen gelangen kann. Die Reinigung der Sensoren 19 bis 22 kann zeitgesteuert erfolgen, vorzugsweise in regelmäßigen Zeitabständen.

Es ist auch möglich, dass die Sensoren 19 bis 22 so ausgebildet sind, dass sie eine Verschmutzung der Sender- und Empfängerfläche selbst erkennen und entweder ein entsprechendes Signal erzeugen, dass eine Reinigung notwendig ist, oder dass sie selbst die Druckluftdüsen betätigen, so dass eine automatische Reinigung erfolgt.

Zur Kalibrierung der Sensoren 19 bis 22 wird ein Normwerkstück oder ein Kalibriermuster auf den Maschinentisch 9 aufgelegt. Dann werden die Sensoren 19 bis 22 hinsichtlich des Höhenmaßes 33, 33' abgenullt. Die Kalibrierung erfolgt vorteilhaft nach jeder neuen Einstellung der Sensoren 19 bis 22. Eine solche Sensoreinstellung ist notwendig, wenn ein Profilwechsel des Werkstückes 1 durchgeführt werden muss, wenn Werkstücke 1 mit anderer Dicke und/oder anderer Breite eingesetzt werden sollen. Bei Dickenunterschieden der Werkstücke 1 ist eine Höhenverstellung der Sensoren 19, 20 dann erforderlich, wenn das Höhenmaß 33 außerhalb des Messbereiches der Sensoren liegt. Dann werden die Sensoren 19, 20 so eingestellt, dass der Abstand innerhalb des vorgegebenen Messbereichs liegt.

Mittels der Messeinrichtung lässt sich die absolute Dicke der Werkstücke 1 bestimmen, wenn die Dicke des Kalibriermusters bekannt ist oder wenn die Position der Sensoren 19 bis 22 in vertikaler Richtung beispielsweise mittels Linearmaßstäben ermittelt wird. In diesem Fall ermittelt sich die Dicke aus dem vertikalen Abstand des unteren und oberen Sensors abzüglich der beiden ermittelten Abstände der Werkstückober- bzw. -unterseite von den entsprechenden Sensoren. In vielen Fällen ist eine absolute Dickenbestimmung nicht notwendig, sondern es reicht aus, die Abweichung von dem Kalibrierwert zu ermitteln und hinsichtlich vorgegebener Toleranzgrenzen zu überwachen.

Die Verstellung der Sensoren 19 bis 22 in Breitenrichtung 31 erlaubt es, den Auftreffpunkt der Laserstrahlen 27 bis 30 auf die Werkstückseiten 23, 24 in einem bestimmten Abstand von den beiden Längsseiten 25, 26 des Werkstückes 1 einzustellen.

Mit den Sensoren 19 bis 22 kann nicht nur die Dicke und die Parallelität der Flächen von Werkstücken mit rechteckigem Querschnitt gemessen werden, sondern beispielsweise auch Falzstärken, Federdicken und andere Profildimensionen.

Insbesondere wenn die Sensoren 19 bis 22 unabhängig voneinander verstellbar sind, besteht die Möglichkeit, ein Profil an den Werkstückseiten 23, 24 exakt zu vermessen. In Fig. 2 ist beispielhaft ein Werkstück 1 dargestellt, dessen Oberseite mit einem Profil versehen ist. Der Sensor 19 wird in diesem Falle so eingestellt, dass sein Sensorstrahl 27 den höheren Profilteil erfasst. Der Sensor 20 wird so eingestellt, dass sein Sensorstrahl 28 den flacheren Teil des Werkstückprofiles erfasst.

Die Sensoren 19 bis 22 befinden sich außerhalb des Maschinenraums, so dass die bei der Bearbeitung der Werkstücke 1 in der Maschine anfallenden Späne und Staub die Sensoren nicht verschmutzen können. Dadurch ist eine lange Einsatzdauer der Messeinrichtung 18 gewährleistet.

Die Messung der Werkstücke 1 erfolgt im Durchlaufverfahren, wodurch ein ununterbrochener Fertigungsprozess und damit eine hohe Produktivität sichergestellt sind. Da die Messung bedienerunabhängig erfolgt, kann eine sehr hohe Bearbeitungsqualität eingehalten werden.

Durch den Einsatz der Messeinrichtung 18 wird eine zuverlässige Verleimung der Werkstücke bei der Herstellung von Leimbindern erreicht. Zudem wird ein Ausschuss von Werkstücken 1 minimiert, da Herstellfehler sofort von der Messeinrichtung 18 erkannt werden.

Die Messeinrichtung 18 ermöglicht es ferner, eine Produktionsdokumentation für eine Zertifizierung anzufertigen. Die von den Sensoren 19 bis 22 an die Steuerung gelieferten Messwerte sowie die von der Steuerung hieraus ermittelten Messwerte bzw. ermittelten Werkstückdicken, Werkstückparallelität und Toleranzen können abgespeichert werden, wobei gleichzeitig auch beispielsweise die Art des Werkstückes, die Art der Werkstückbearbeitung, die Bearbeitungsparameter und dergleichen abgespeichert werden können.

Mit der beschriebenen Messeinrichtung 18 ist eine zuverlässige Qualitätssicherung bei der Werkstückbearbeitung gewährleistet, insbesondere beim Hobeln von Leimbinderlamellen, bei dem die Werkstücke 1 mit ihrer Werkstückoberseite 23 bzw. Werkstückunterseite 24 aufeinanderliegend miteinander verleimt werden. Die so aufeinanderliegenden und miteinander verleimten Werkstücke 1 bilden den Leimbinder 35, der auch als Brettschichtholz bezeichnet wird. Durch die Vermessung der Parallelität der Werkstückoberseite 23 zur Werkstückunterseite 24 ist sichergestellt, dass das aus den aufeinanderliegenden Werkstücken gebildete Brettschichtholz keine Krümmung aufweist, sondern im Querschnitt rechtwinklig ist. Außerdem ist gewährleistet, dass eine optimale Verleimung stattfinden kann und die Leimfugen geschlossen sind.

Fig. 4 zeigt ein solches gekrümmtes Brettschichtholz 35. Die Krümmung entsteht dadurch, dass die aufeinander liegenden Werkstücke 1 Oberseiten 23 und Unterseiten 24 haben, die nicht parallel zueinander verlaufen.

Die Messeinrichtung 18 kann auch bei sonstigem vierseitigem Hobeln und Profilieren von Werkstücken eingesetzt werden, um beispielsweise Isolierstäbe oder Nut- und Federbretter herzustellen. Mit Nut- und Federbrettern werden beispielsweise Fußbodenbeläge hergestellt.

Die Messeinrichtung 18 kann allgemein dort eingesetzt werden, wo es auf eine hohe Profilgenauigkeit ankommt, beispielsweise bei der Gehrung von Bilderrahmen.

Die Messeinrichtung 18 kann an bereits bestehende Maschinen nachträglich angebaut werden, so dass die hohe Qualität auch bei solchen Maschinen erreicht werden kann. Die Messung der Dicke und der Parallelität erfolgt permanent und berührungslos. Insbesondere die berührungslos messende Sensorik stellt sicher, dass die Werkstücke 1 nach ihrer Bearbeitung nicht beschädigt werden. Außerdem wird der Verschleiß der Sensoren 19 bis 22 selbst gering gehalten. Die Messung kann bei hohen Transportgeschwindigkeiten der Werkstücke 1 durch die Maschine zuverlässig durchgeführt werden. Beispielsweise können die Werkstücke 1 eine Durchlaufgeschwindigkeit in der Größenordnung von etwa 250 m/min haben.

Die Auswerteelektronik/Logik in der Steuerung enthält die Grenzwerte hinsichtlich der Dicke und der Parallelität, bei deren Überschreiten in der beschriebenen Weise die Steuerung entsprechende Signale aussendet.

Als Messelemente können auch 3D-Kameras eingesetzt werden. Dann reicht es aus, oberhalb und unterhalb des Werkstückes 1 jeweils nur eine 3D-Kamera zu verwenden. Mit den 3D-Kameras kann in der beschriebenen Weise die Parallelität der Oberseite 23 und der Unterseite 24 des Werkstückes 1 ermittelt werden. Da die 3D-Kameras wie die Sensoren 19 bis 22 berührungslos arbeiten, ist eine Beschädigung der Messelemente und/oder der Werkstücke 1 vermieden.

Grundsätzlich kann das Verfahren nicht nur berührungslos, sondern auch berührend durchgeführt werden. Als Messelemente werden in diesem Fall beispielsweise digitale Messtaster eingesetzt, die als Gleitschuh oder als Rolle ausgebildet sind und am Werkstück 1 während dessen Durchlaufs durch die Maschine anliegen.

## Patentansprüche

1. Kehlmaschine zur Bearbeitung von länglichen Werkstücken aus Holz, Kunststoff und dergleichen, mit wenigstens einer Transportbahn für die Werkstücke, entlang welcher die Werkstücke durch die Maschine zur Bearbeitung geführt werden, und mit drehbar angetriebenen Werkzeugen zur Bearbeitung der Ober- und der Unterseite der Werkstücke,
**dadurch gekennzeichnet, dass** die Maschine mit wenigstens einer Messeinrichtung (18) versehen ist, die im Bereich oberhalb und unterhalb des Werkstückes (1) jeweils wenigstens ein Messelement (19 bis 22) aufweist, das an eine Steuerung angeschlossen ist, die aus den von den Messelementen (19 bis 22) gelieferten Messsignalen die Parallelität zwischen der Oberseite (23) und der Unterseite (24) des Werkstückes (1) ermittelt.

2. Kehlmaschine nach Anspruch 1,
**dadurch gekennzeichnet, dass** die Messelemente (19 bis 22) mit Abstand zur Ober- und Unterseite (23, 24) der Werkstücke (1) angeordnet sind, und dass vorteilhaft im Bereich oberhalb und unterhalb des Werkstückes (1) jeweils zwei Messelemente (19 bis 22) vorgesehen sind.

3. Kehlmaschine nach Anspruch 1 oder 2,
**dadurch gekennzeichnet, dass** die Messeinrichtung (18) außerhalb des Maschinenraumes, vorteilhaft an einer Auslauföffnung (14) der Maschine, angeordnet ist.

4. Kehlmaschine nach Anspruch 3,
**dadurch gekennzeichnet, dass** die vorteilhaft als berührungslos arbeitende Sensoren, insbesondere Laserabstandssensoren, ausgebildeten Messelemente (19 bis 22) im Bereich der rechten und der linken Längsseite (25, 26) des Werkstückes (1) angeordnet sind.

5. Kehlmaschine nach Anspruch 3 oder 4,
**dadurch gekennzeichnet, dass** zumindest einer der beiden oberen Sensoren (19, 20) quer, vorzugsweise senkrecht zur Oberseite (23) des Werkstückes (1) einstellbar ist.

6. Kehlmaschine nach einem der Ansprüche 1 bis 3,
**dadurch gekennzeichnet, dass** im Bereich oberhalb und unterhalb des Werkstückes (1) als Messelement jeweils eine 3D-Kamera vorgesehen ist.

7. Verfahren zur Vermessung von länglichen Werkstücken aus Holz, Kunststoff und dergleichen, insbesondere unter Verwendung der Kehlmaschine nach einem der Ansprüche 1 bis 6,
**dadurch gekennzeichnet, dass** von Messelementen (19 bis 22) der Abstand zu der Oberseite (23) und der Unterseite (24) des Werkstückes (1) gemessen wird, und dass aus den Abstandswerten das Maß der Parallelität von Oberseite (23) und Unterseite (24) des Werkstückes (1) ermittelt wird.

8. Verfahren nach Anspruch 7,
**dadurch gekennzeichnet, dass** aus den Abstandswerten die Dicke des Werkstückes (1) ermittelt wird.

9. Verfahren nach Anspruch 7 oder 8,
**dadurch gekennzeichnet, dass** von jeweils zwei im Bereich oberhalb und unterhalb des Werkstückes (1) vorgesehenen Abstandssensoren (19 bis 22) nahe den Längsseiten (25, 26) des Werkstückes (1) der Abstand zu der Oberseite (23) und der Unterseite (24) gemessen wird, und dass aus den Abstandswerten das Maß der Parallelität von Oberseite (23) und Unterseite (24) des Werkstückes (1) ermittelt wird.

10. Verfahren nach Anspruch 9,
**dadurch gekennzeichnet, dass** aus den Abstandswerten die Dicke nahe den Längsseiten (25, 26) des Werkstückes (1) ermittelt wird.

11. Verfahren nach einem der Ansprüche 7 bis 10,
**dadurch gekennzeichnet, dass** die Steuerung ein Signal erzeugt, sobald das Maß der Parallelität von Oberseite (23) und Unterseite (24) des Werkstückes (1) einen vorgegebenen Toleranzwert über- oder unterschreitet, und dass vorteilhaft das Steuerungssignal ein Meldesignal oder ein Abschaltsignal ist, mit dem die Maschine abgeschaltet ist.

12. Verfahren nach einem der Ansprüche 7 bis 11,
**dadurch gekennzeichnet, dass** die Messung während des Transportes des Werkstückes (1), vorteilhaft quasi-kontinuierlich, vorgenommen wird.

13. Verfahren nach einem der Ansprüche 7 bis 12,
**dadurch gekennzeichnet, dass** aus mehreren Abstandswerten jeweils ein Mittelwert gebildet wird, der zur Berechnung der Dicke des Werkstückes herangezogen wird, und dass vorzugsweise als Mittelwert der gleitende Medianwert ermittelt und herangezogen wird.

## Claims

1. Moulding machine for machining elongated workpieces consisting of wood, synthetic material and the like, having at least one transport path for the workpieces along which the workpieces are guided through the machine for machining, and having rotatably driven tools for machining the upper and the lower side of the workpieces, **characterized in that** the machine is provided with at least one measuring device (18) which comprises at least one measuring element (19 to 22) in each case in the region above and below the workpiece (1) which is connected to a controller which determines the parallelism between the upper side (23) and the lower side (24) of the workpiece (1) from the measurement signals delivered by the measuring elements (19 to 22).

2. Moulding machine according to Claim 1, **characterized in that** the measuring elements (19 to 22) are arranged at a distance from the upper and lower side (23, 24) of the workpieces (1) and that advantageously two measuring elements (19 to 22) are provided in each case in the region above and below the workpiece (1) .

3. Moulding machine according to Claim 1 or 2, **characterized in that** the measuring device (18) is arranged outside the machine compartment, advantageously at an outlet opening (14) of the machine.

4. Moulding machine according to Claim 3, **characterized in that** the measuring elements (19 to 22) advantageously configured as sensors operating in a contactless manner, in particular laser distance sensors, are arranged in the region of the right and the left longitudinal side (25, 26) of the workpiece (1).

5. Moulding machine according to Claim 3 or 4, **characterized in that** at least one of the two upper sensors (19, 20) is adjustable transversely, preferably perpendicularly to the upper side (23) of the workpiece (1) .

6. Moulding machine according to one of Claims 1 to 3, **characterized in that** in each case a 3D camera is provided as measuring element above and below the workpiece (1).

7. Method for measuring elongated workpieces consisting of wood, synthetic material and the like, in particular using the moulding machine according to one of Claims 1 to 6, **characterized in that** the distance from the upper side (23) and the lower side (24) of the workpiece (1) is measured by measuring elements (19 to 22) and that the extent of the parallelism of upper side (23) and lower side (24) of the workpiece (1) is determined from the distance values.

8. Method according to Claim 7, **characterized in that** the thickness of the workpiece (1) is determined from the distance values.

9. Method according to Claim 7 or 8, **characterized in that** the distance from the upper side (23) and the lower side (24) is measured in each case by two distance sensors (19 to 22) provided in the region above and below the workpiece (1) near the longitudinal sides (25, 26) of the workpiece (1) and that the extent of the parallelism of upper side (23) and lower side (24) of the workpiece (1) is determined from the distance values.

10. Method according to Claim 9, **characterized in that** the thickness close to the longitudinal sides (25, 26) of the workpiece (1) is determined from the distance values.

11. Method according to one of Claims 7 to 10, **characterized in that** the controller generates a signal as soon as the extent of the parallelism of upper side (23) and lower side (24) of the workpiece (1) exceeds or falls below a predefined tolerance value and that advantageously the control signal is a status signal or a switch-off signal by means of which the machine is switched off.

12. Method according to one of Claims 7 to 11, **characterized in that** the measurement is made advantageously quasi-continuously during transport of the workpiece (1) .

13. Method according to one of Claims 7 to 12, **characterized in that** in each case an average is formed from several distance values which is used to calculate the thickness of the workpiece and that preferably the moving median value is determined and used as the average.

## Revendications

1. Moulurière, destinée à usiner des pièces à usiner oblongues en bois, en matière plastique et analogues, pourvue d'un moins une voie de transport pour les pièces à usiner, le long de laquelle les pièces à usiner sont guidées à travers la machine pour leur usinage, et pourvue d'outils entraînés en rotation pour l'usinage de la face supérieure et de la face inférieure des pièces à usiner,
**caractérisée en ce que** la machine est munie d'au moins un dispositif de mesure (18) qui comporte dans la zone au-dessus et en-dessous de la pièce à usiner (1) chaque fois au moins un instrument de mesure (19 à 22) qui est connecté sur un système de commande, qui à partir des signaux de mesure fournis par les éléments de mesure (19 à 22) détermine le parallélisme entre la face supérieure (23) et la face inférieure (24) de la pièce à usiner (1).

2. Moulurière selon la revendication 1,
**caractérisée en ce que** les éléments de mesure (19 à 22) sont placés avec une distance par rapport à la face supérieure et à la face inférieure (23, 24) des pièces à usiner (1), et **en ce qu'**avantageusement dans la zone au-dessus et en-dessous de la pièce à usiner (1) sont prévus chaque fois deux éléments de mesure (19 à 22).

3. Moulurière selon la revendication 1 ou 2,
**caractérisée en ce que** le dispositif de mesure (18) est placé en-dehors de l'espace de la machine, avantageusement sur une ouverture de sortie (14) de la machine.

4. Moulurière selon la revendication 3,
**caractérisée en ce que** les éléments de mesure (19 à 22) avantageusement conçus sous la forme de capteurs fonctionnant sans contact, notamment de capteurs de distance à laser sont placés dans la zone du côté longitudinal (25, 26) gauche et droit de la pièce à usiner (1).

5. Moulurière selon la revendication 3 ou 4,
**caractérisée en ce qu'**au moins l'un des deux capteurs (19, 20) supérieurs est réglable à la transversale, de préférence à la perpendiculaire de la face supérieure (23) de la pièce à usiner (1).

6. Moulurière selon l'une quelconque des revendications 1 à 3,
**caractérisée en ce que** dans la zone au-dessus et en-dessous de la pièce à usiner (1) est prévue une caméra 3 D en tant qu'instrument de mesure.

7. Procédé, destiné au mesurage de pièces à usiner oblongues, en bois, en matière plastique et analogues, en utilisant notamment la moulurière selon l'une quelconque des revendications 1 à 6,
**caractérisé en ce que** des éléments de mesure (19 à 22) mesurent la distance par rapport à la face supérieure (23) et à la face inférieure (24) de la pièce à usiner (1) et **en ce qu'**à partir des valeurs des distances, la dimension du parallélisme de la face supérieure (23) et de la face inférieure (24) de la pièce à usiner (1) est déterminée.

8. Procédé selon la revendication 7,
**caractérisé en ce qu'**à partir des valeurs des distances, l'épaisseur de la pièce à usiner (1) est déterminée.

9. Procédé selon la revendication 7 ou 8,
**caractérisé en ce que** par chaque fois deux capteurs de distance (19 à 22) prévus dans la zone au-dessus et en-dessous de la pièce à usiner (1), à proximité des côtés longitudinaux (25, 26) de la pièce à usiner (1), la distance par rapport à la face supérieure (23) et à la face inférieure (24) est mesurée, et **en ce qu'**à partir des valeurs de distance, la dimension du parallélisme de la face supérieure (23) et de la face inférieure (24) de la pièce à usiner (1) est déterminée.

10. Procédé selon la revendication 9,
**caractérisé en ce qu'**à partir des valeurs de distance, l'épaisseur à proximité des côtés longitudinaux (25, 26) de la pièce à usiner (1) est déterminée.

11. Procédé selon l'une quelconque des revendications 7 à 10,
**caractérisé en ce que** le système de commande génère un signal, dès que la dimension du parallélisme de la face supérieure (23) et de la face inférieure (24) de la pièce à usiner (1) dépasse ou n'atteint pas une valeur de tolérance prédéfinie, et **en ce qu'**avantageusement, le signal de commande est un signal de signalisation ou un signal de coupure, par lequel la machine est mise à l'arrêt.

12. Procédé selon l'une quelconque des revendications 7 à 11,
**caractérisé en ce qu'**il est procédé au mesurage pendant le transport de la pièce à usiner (1), avantageusement de manière quasi-continuelle.

13. Procédé selon l'une quelconque des revendications 7 à 12,
**caractérisé en ce qu'**à partir de plusieurs valeurs de distance est formée chaque fois une moyenne, qui est mise à contribution pour calculer l'épaisseur de la pièce à usiner et **en ce que** de préférence, la valeur moyenne déterminée et mise à contribution est la valeur médiane glissante.
